# EUROPÄISCHE PATENTANMELDUNG

(11) **EP 0 839 837 A1**
(43) Veröffentlichungstag der Anmeldung: **06.05.1998**
(21) Anmeldenummer: 97118405.6
(22) Anmeldetag: 23.10.1997
(51) Int. Cl.: C08F 6/00, C08F 6/20, C08F 10/06

(54) **Verfahren zur kontinuierlichen Herstellung von elastischen Polypropylenen**

(30) Priorität: 31.10.1996 AT 1907/96
(71) Anmelder: PCD-Polymere Gesellschaft m.b.H., A-2323 Schwechat-Mannswörth (AT)
(72) Erfinder: Rätzsch, Manfred, Dr., 4202 Kirchschlag (AT); Bucka, Hartmut, Dipl.-Ing., 4622 Eggendorf (AT)
(74) Vertreter: Kunz, Ekkehard, Dr.

(57) **Zusammenfassung**

Verfahren zur kontinuierlichen Herstellung von elastischen Polypropylenen durch Polymerisation in flüssigem Propylen bei 50 bis 100°C und 25 bis 60 bar bis zu einem Feststoffgehalt von 5 bis 30 Ma%. Das Polymerisationsgemisch wird anschließend auf einen Feststoffgehalt von 20 bis 50 Ma% eingedickt, auf 10 bis 15 bar entspannt und direkt der Förderzone eines Extruders zugeführt.

## Beschreibung

Die Erfindung betrifft ein Verfahren zur kontinuierlichen Herstellung von elastischen Polypropylenen sowie deren Copolymeren mit Ethylen.

Elastische Polypropylene, wie sie beispielsweise in der US 4,335,225, US 4,522,982 und US 5,118,768 beschrieben sind, zeichnen sich im Gegensatz zu konventionellen, zumeist isotaktischen Polypropylenen, insbesondere durch hohe Elastizität sowie gute Zähigkeit und Schlagzähigkeit aus. Sie besitzen jedoch vor allem den Nachteil, daß sie sehr leicht agglomerieren und nicht frei fließend sind. Dadurch wird vor allem ihre weitere Handhabung erschwert, insbesondere durch Bildung von Klumpen sowie durch Anhaften und Kleben an Apparaten, Transportleitungen und Lagerbehältern. Um diese Nachteile zu beseitigen wird gemäß DE-OS 4321496 in flüssigem Propylen polymerisiert und das Polymerisationsgemisch im Anschluß an die Polymerisation mit speziellen polaren Lösungsmitteln versetzt.

Die Aufgabe der vorliegenden Erfindung lag demnach darin, ein Polymerisationsverfahren zu finden, bei dem diese Nachteile ausgeschaltet werden, ohne daß der zusätzliche Verfahrensschritt der Zugabe von zusätzlichen Lösungsmitteln und -deren Aufarbeitung notwendig ist. Überraschenderweise wurde gefunden, daß diese Aufgabe dadurch gelöst werden kann, daß die Polymerisation und die Aufarbeitung des Polymerisationsgemisches in mehreren speziellen Teilschritten erfolgt, wobei sich die Apparate selbst reinigen.

Gegenstand der Erfindung ist demnach ein Verfahren zur kontinuierlichen Herstellung von elastischen Polypropylenen durch Polymerisation von Propylen in flüssigem Propylen, gegebenenfalls mit Ethylen als Comonomer, bei Temperaturen von 50 °C bis 100 °C, vorzugsweise von 60 bis 75 °C und Drücken von 25 bar bis 60 bar, vorzugsweise von 30 bis 50 bar, in Rührreaktoren, dadurch gekennzeichnet,
- daß der Feststoffgehalt im Polymerisationsgemisch am Reaktorausgang 5 Ma% bis 30 Ma%, vorzugsweise 10 Ma% bis 20 Ma% beträgt,
- daß das Polymerisationsgemisch nach der Polymerisation bei Temperaturen von 50 °C bis 100 °C bevorzugt von 60 °C bis 75 °C und bei Drücken von 25 bar bis 60 bar, bevorzugt von 30 bar bis 50 bar, bis zu einem Feststoffgehalt von 20 Ma% bis 50 Ma%, bevorzugt bis zu einem Feststoffgehalt von 30 Ma% bis 40 Ma% eingedickt wird,
- daß das eingedickte Polymerisationsgemisch anschließend auf einen Druck von 2 bar bis 25 bar, bevorzugt auf einen Druck von 10 bar bis 15 bar entspannt wird, wobei ein Teil der nichtumgesetzten Monomeren verdampff und anschließend direkt der Förderzone eines Extruders zugeführt wird, in dem das Polymere von nichtumgesetzten Monomeren getrennt und gegebenenfalls unter Zusatz von üblichen Additiven aufgeschmolzen, homogenisiert und granuliert wird.

Die Polymerisation erfolgt analog zu bekannten Verfahren, wie beispielsweise in DE-OS 4321496 beschrieben. Als Katalysatoren werden bevorzugt solche auf Basis von metallorganischen Ti-, Zr- oder Hf-Verbindungen auf einem Oxidträger (US 4,335,225), Metallocenkatalysatoren in Kombination mit Aluminoxanan (US 4,522,982) oder Reaktionsprodukte von Magnesiumalkoxiden mit einem tetravalenten Titanchlorid in Gegenwart spezieller Elektronendonoren (US 5,118,768) eingesetzt. Das nach der Polymerisation erhaltene Polymerisationsgemisch wird in üblichen Eindickern, wie z. B. kontinuierliche Vollmantelzentrifugen, bevorzugt in einem Hydrozyklon, auf den gewünschten Feststoffgehalt eingedickt. Die Abtrennung von nichtumgesetzten Restmonomeren erfolgt vorzugsweise in der Feststofförderzone des Extruders.

In vielen Fällen erweist es sich als vorteilhaft, nach der Polymerisation eventuell vorhandene Katalysatorreste zu desaktivieren, beispielsweise durch Zugabe von Wasser oder von Alkoholen, wie z. B. Methanol oder Ethanol. Die Desaktivierung erfolgt bevorzugt im Extruder. Als Ertruder können sowohl Einschneckenestruder als auch, bevorzugt, Doppelschneckenertruder eingesetzt werden.

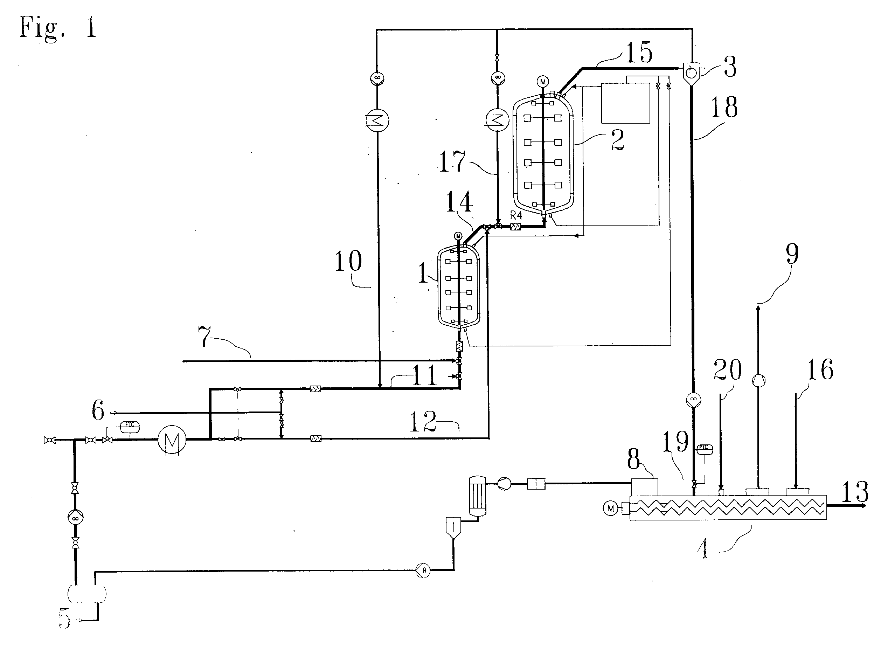

Das erfindungsgemäße Polymerisationsverfahren wird beispielhaft in der in Figur 1 schematisch dargestellten, zweistufigen Polymerisationsanlage beschrieben.

In Figur 1 bedeuten:

| | |
|---|---|
| (1) Polymerisationsreaktor I | (11) Monomerenstrom I |
| (2) Polymerisationsreaktor II | (12) Monomerenstrom II |
| (3) Hydrozyklon | (13) Granulierung |
| (4) Doppelschneckenextruder | (14) Polymerisationsgemisch |
| (6) Ethyleneinspeisung | (15) Polymerisationsgemisch II |
| (5) Propyleneinspeisung | (16) Additivdosierung |
| (7) Katalysatoreinspeisung | (17) Propylenrückführung II |
| (8) Rückwärtsentgasung | (18) Unterlauf/Hydrozyklon |
| (9) Entgasungszone | (19) Entspannungsventil |
| (10) Propylenrückführung I | (20) Wasserdosierung |

Gemäß Fig 1 wird bei (5) Propylen, bei (6) Ethylen und bei (7) der Katalysator zudosiert und über die Leitung (11) von unten in den Reaktor (1) gepumpt. Als Katalysator wurde Tetraneophylzirkonium, als Gokatalysator Aluminiumoxid eingesetzt. Das Polymerisationsgemisch durchströmt den Reaktor (1) von unten nach oben und wird über Leitung (14) dem Reaktor (2) zugeführt, der ebenfalls von unten nach oben durchströmt wird. In die Leitung (14) kann zusätzlich ein weiterer MonomerenTeilstrom (12) eingeleitet werden. Beide Reaktoren sind mit einem wassergekühlten Doppelmantel zur Abführung der Polymerisationswärme, sowie mit mehreren auf einer Welle angeordneten Rührern ausgestattet. Der Druck in Reaktor (1) und Reaktor (2) beträgt 35 bar, die Temperatur 65 °C. Der Feststoffgehalt im Reaktor (1) beträgt 15 Ma%, im Reaktor (2) 16 Ma%. Das Polymerisationsgemisch strömt aus dem Kopf des Reaktors (2) über die Leitung (15) zu einem Hydrozyklon (3), in dem es bei 34 bar und 65 ⁰C bis zu einem Feststoffgehalt von 25 Ma% eingedickt wird. Der Oberlauf des Hydrozyklons (3), der hauptsächlich aus flüssigem Propylen und geringen Mengen Feststoff besteht, wird über die Leitungen 10 und 17 in die Leitungen 11 und 14 rückgeführt. Das Polymerisationsgemisch aus dem Unterlauf des Hydrozyklons, das 25 Ma% Feststoff enthält, wird über Ventil (19) auf 15 bar entspannt, wobei ein Teil der nichtumgesetzten Monomeren (Propylen) verdampft, und direkt dem Produkteintrittsstutzen des Doppelschneckenextruders (4) zugeführt. Das gasförmige Propylen wird in der Feststoffförderzone vom Polymeren getrennt und strömt über eine Rückwärtsentgasung (8) aus dem Extruder. Das gasförmige Propylen wird verdichtet und gekühlt. Das derart kondensierte Propylen wird in einen Frischpropylenbehälter gefördert. Im Extruder werden bei (16) übliche Additive, wie z.B.Thermostabilisatoren, Gleitmittel, Antiblockmittel etc., und bei (20) Wasser zudosiert. Das Wasser dient sowohl zur Desaktivierung eventuell noch vorhandener Katalysatorreste, als auch zur Erhöhung der Effektivität der Restpropylenentfernung in der nachfolgenden Expansionszone / Entgasungszone (9). Das in der Entgasungszone (9) entfernte Propen-Wassergemisch wird einer Fackel zur Verbrennung zugeführt. Das Polymere wird aus der Expansionszone zu einer Lochplatte gefördert und mit einer Unterwassergranulierung (13) granuliert. Die üblicherweise nach der Abtrennung des elastischen Polypropylens vom Monomeren auftretenden Probleme durch Bildung von Klumpen bzw. durch Verklebungen an Apparaten konnten mit dieser Verfahrensweise vollständig vermieden werden.

## Patentansprüche

1. Verfahren zur kontinuierlichen Herstellung von elastischen Polypropylenen durch Polymerisation von Propylen in flüssigem Propylen, gegebenenfalls mit Ethylen als Comonomer, bei Temperaturen von 50 °C bis 100 °C, vorzugsweise von 60 bis 75 °C und Drücken von 25 bar bis 60 bar, vorzugsweise von 30 bis 50 bar, in Rührreaktoren, dadurch gekennzeichnet,
- daß der Feststoffgehalt im Polymerisationsgemisch am Reaktorausgang 5 Ma% bis 30 Ma%, vorzugsweise 10 Ma% bis 20 Ma% beträgt,
- daß das Polymerisationsgemisch nach der Polymerisation bei Temperaturen von 50 °C bis 100 °C, bevorzugt von 60 °C bis 75 °C und bei Drücken von 25 bar bis 60 bar, bevorzugt von 30 bar bis 50 bar bis zu einem Feststoffgehalt von 20 Ma% bis 50 Ma%, bevorzugt bis zu einem Feststoffgehalt von 30 Ma% bis 40 Ma% eingedickt wird,
- daß das eingedickte Polymerisationsgemisch anschließend auf einen Druck von 2 bar bis 25 bar, bevorzugt auf einen Druck von 10 bar bis 15 bar entspannt wird, wobei ein Teil der nichtumgesetzten Monomeren verdampft und anschließend direkt der Förderzone eines Extruders zugeführt wird, in dem das Polymere von nichtumgesetzten Monomeren getrennt und gegebenenfalls unter Zusatz von üblichen Additiven aufgeschmolzen, homogenisiert und granuliert wird.

2. Verfahren gemäß Anspruch 1, dadurch gekennzeichnet, daß die Trennung des Polymeren von nichtumgesetzten Monomeren in der Feststoffförderzone des Extruders erfolgt und die nichtumgesetzten Monomeren in die Polymerisation zurückgeführt werden.

3. Verfahren gemäß Anspruch 1 oder 2, dadurch gekennzeichnet, daß das Polymerisationsgemisch in einem Hydrozyklon eingedickt wird.

4. Verfahren gemäß einem der Ansprüche 1 bis 3, dadurch gekennzeichnet, daß eventuell vorhandene Katalysatorreste nach der Polymerisation mit Wasser oder Alkoholen desaktiviert werden.

5. Verfahren gemäß Anspruch 1, dadurch gekennzeichnet, daß die Desaktivierung im Extruder erfolgt.

6. Verfahren gemäß einem der Ansprüche 1 bis 5, dadurch gekennzeichnet, daR als Extruder ein Doppelschneckenextruder eingesetzt wird.
